# EUROPEAN PATENT SPECIFICATION

(11) **EP 4 343 127 B1**
(45) Date of publication and mention of the grant of the patent: **27.08.2025**
(21) Application number: 23193953.9
(22) Date of filing: 29.08.2023
(51) Int. Cl.: F01P 5/02, B60K 11/02, F01P 5/04

(54) **UNIVERSAL FAN SHAFT MOUNTING PLATE**
UNIVERSELLE BEFESTIGUNGSPLATTE FÜR LÜFTERWELLE
PLAQUE DE MONTAGE D'ARBRE DE VENTILATEUR UNIVERSELLE

(30) Priority: 30.08.2022 US 202263402222 P; 08.08.2023 US 202318231500
(43) Date of publication of application: 27.03.2024
(73) Proprietor: Lombardini S.r.l., 42124 Reggio Emilia (IT)
(72) Inventor: PERRONE, Vincenzo, 42123 Reggio Emilia (IT); BONANNI, Massimiliano, 43124 Parma (IT); MANELLI, Stefano, 42014 Castellarano (RE) (IT); WADIKAR, Nitin Ashokrao, 412207 Pune (IN); KUDAWE, Pritam Ramchandra, 411044 Pune (IN); PATIL, Ashvin Babulal, 411036 Pune (IN)
(74) Representative: Hoefer & Partner Patentanwälte mbB

(56) References cited:
- WO-A1-2021/069089
- US-A- 1 612 685
- US-A- 2 526 242

## Description

### FIELD

The present application relates to a mounting plate for mounting a fan shaft to an engine in a plurality of positions via a rotational motion of the mounting plate.

### BACKGROUND

Combustion engines are used in a wide variety of applications such as, for example, in vehicles, watercraft, aircraft, construction equipment, agricultural equipment, generators, and the like. When an engine is installed for use in an application, the engine may be installed with or without the fan assembly (e.g., a fan pulley and fan). When an engine is installed without a fan assembly, a mounting plate may be required to mount the fan assembly to the engine.
WO 2021/069089 A1 discloses an internal combustion engine with a cylinder crankcase and a cylinder head with integrated height-adjustable fan attachment for elastic V-ribbed belts. The internal combustion engine comprises a crankcase, at least one device for driving a fan, comprising a fan bracket and a bearing arrangement, via which the fan is arranged so as to be displaceable relative to the crankshaft of a combustion engine of the drive assembly, and a belt drive, via which the fan can be driven, having a first belt pulley and a second belt pulley, which are drive-connected via a belt, the first belt pulley being arranged on the bearing arrangement.
The invention is defined by the independent claims. The dependent claims contain advantageous embodiments of the present invention.

### BRIEF DESCRIPTION OF THE DRAWINGS

Exemplary embodiments of the present disclosure are described herein with reference to the following drawings, according to an exemplary embodiment.
FIG. 1 illustrates a perspective view of a mounting plate according to an exemplary embodiment of the present disclosure.
FIG. 2 illustrates a perspective view of a mounting plate according to another exemplary embodiment of the present disclosure.
FIG. 3 illustrates a perspective view of yet another mounting plate according to an exemplary embodiment of the present disclosure.
FIG. 4 illustrates a perspective view of an engine assembly according to an exemplary embodiment of the present disclosure.
FIG. 5 illustrates a cross section view of a mounting plate and a fan assembly according to an exemplary embodiment of the present disclosure.
FIG. 6 illustrates a cross section view of a fan pulley assembly according to an exemplary embodiment of the present disclosure.
FIG. 7 illustrates a cross section view of a fan assembly according to another embodiment of the present disclosure.
FIG. 8 illustrates a cross section view of a fan assembly according to yet another embodiment of the present disclosure.
FIG. 9 illustrates an engine assembly including a mounting plate coupled to an engine in a first position according to an exemplary embodiment of the present disclosure.
FIG. 10 illustrates an engine assembly including a mounting plate coupled to an engine in a second position according to an exemplary embodiment of the present disclosure.
FIG. 11 illustrates an engine assembly including a mounting plate coupled to an engine in a third position according to an exemplary embodiment of the present disclosure.
FIG. 12 illustrates a flowchart for coupling a fan mounting plate to an engine according to an exemplary embodiment of the present disclosure.

### DETAILED DESCRIPTION

Often times, the spaces provided for an engine and an engine fan in various applications are designed in consideration of the spatial requirements of only a single engine or a single engine manufacturer. Accordingly, in some instances the spaces provided may only be able to accommodate the single engine type or single engine manufacturer considered during design. In other instances, the location of an engine fan must be changed in order for an engine to be used in an application, due to spatial constraints of the application.

Accordingly, in order for an engine to be used in a plurality of different applications, the engine fan must be capable of mounting to the engine in a plurality of different positions. Mounting a fan to an engine in a plurality of different positions requires that either holes for mounting a single fan mounting plate to the engine are formed in the engine for each of the plurality of different positions or that a different mounting plate is provided for each of the plurality of fan positions. Forming holes in the engine for mounting a single fan mounting plate to the engine in each of the plurality of different positions is disadvantageous because forming additional holes in the engine increases manufacturing cost and limits the degree of freedom when designing the engine as holes may not be formed in some parts and/or regions of the engine. Using a different mounting plate for each of the plurality of different positions is disadvantageous because additional parts must be manufactured, increasing costs. Accordingly, there exists a need for a universal mounting plate for mounting a fan to an engine in a plurality of positions in consideration of the spatial constraints of various engine applications.

Before turning to the figures, which illustrate certain exemplary embodiments in detail, it should be understood that the present disclosure is not limited to the details and methodology set forth in the detailed description or illustrated in the figures. It should be understood that the terminology used herein is for the purpose of description only and should not be regarded as limiting.

When a component, element, device, or the like of the present disclosure is described as having a purpose or performing an operation, function, or the like, the component, device, or element should be considered herein as being "configured to" meet that purpose or to perform that operation or function.

Described herein are mounting plates for mounting a fan to an engine and engine assemblies including a mounting plate for mounting a fan to an engine. The mounting plates and engine assemblies disclosed herein allow a fan shaft to be installed on an engine in a plurality of different positions using a single mounting plate. Rotational motion of the mounting plate allows the location of the fan shaft, and thus the location of an engine fan to be changed relative to the engine. Changing the location of an engine fan relative to the engine allows the engine and fan to be used in a variety of applications having different spatial constraints. In one example, the mounting plate may provide a plurality of fan positions so that an engine and fan fit within a plurality of different engine bays. In another example, the mounting plate may provide a plurality of fan positions so that the engine and fan fit within a plurality of different generator enclosures. In another examples, the mounting plate or an engine assembly including a mounting plate disclosed herein may be used to adjust a location of an engine fan allowing a replacement or new engine to fit within the spatial constraints of a plurality of different engine bays.

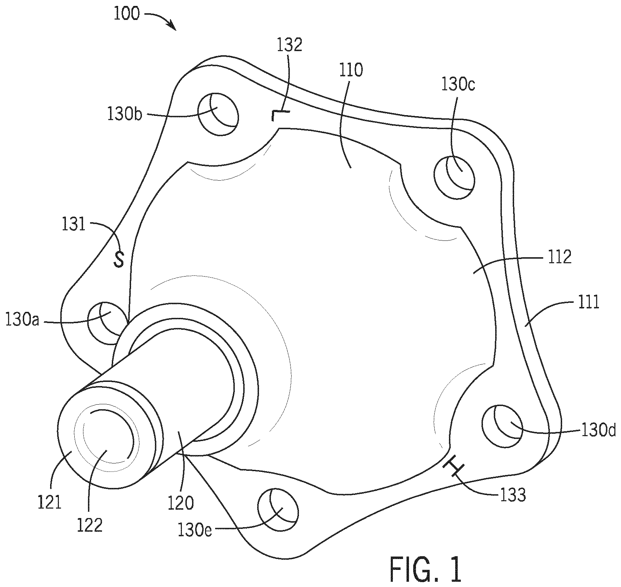

FIG. 1 illustrates a perspective view of a mounting plate according to an embodiment of the present disclosure. The mounting plate 100 includes a body 110 and a fan shaft 120 extending away from the body 110. The mounting plate 100 further includes a plurality of body mounting holes 130 (body mounting holes 130a-130e).

The body 110 may be configured to be coupled to an engine in a plurality of different positions. Each of the plurality of positions of the body 110 may be achieved via a rotational motion of the body 110. The body 110 includes a perimeter 111 forming an outer edge of the body 110 and defining a shape of the body 110. In some examples, and as illustrated in FIG. 1, the body 110 has a pentagonal shape. The size and shape of the body 110 may vary. In other examples, the body 110 may have a rectangular or square shape. The body 110 may be comprised of a metal, or a metal alloy. For example, the body 110 may be comprised of aluminum alloy, cast iron, steel, or the like.

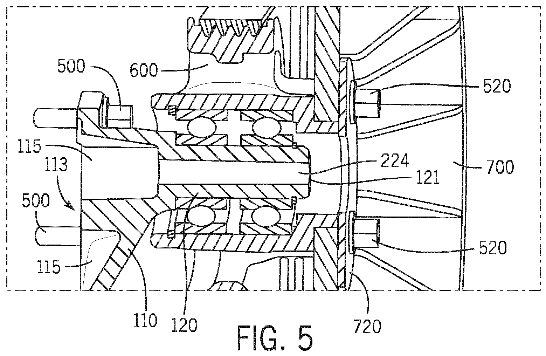

In some examples, as illustrated in FIG. 1, an outer surface 112 of the body 110 or a portion of the outer surface 112 of the body 110 may have a substantially convex shape. An outer surface 112 of the body 110 may have a substantially convex such that the body 110 has smallest thickness between the outer surface 112 and a surface opposite the outer surfaced (i.e., inner surface 113 as illustrated in FIG. 5) along the perimeter 111 of the body 110. In some examples, and as illustrated in FIG. 1, a thickness between the outer surface 112 and a surface opposite the outer surface may gradually increase to point on the body 110 at which the fan mounting shaft 120 is disposed. In other examples, the thickness between the outer surface and a surface opposite the outer surface may gradually increase to a center point. In other examples, the thickness may gradually increase to another point. The rate at which the thickness increases may vary, in some areas the rate of change may be greater than in other areas. The thickness of the body 110 may vary. The surface opposite the outer surface may be a planar or a substantially planar surface.

The mounting plate 100 includes a fan mounting shaft 120 extending away from the body 110 of the mounting plate 100. The fan shaft 120 has a circular cross section. The diameter of the fan shaft 120 may vary. The length of the fan shaft, i.e., the distance between the body 110 and a protruding end 121 of the fan shaft 120 may vary. The fan shaft 120 includes a central axis 122 extending along a center point of the circular cross section of the fan shaft 120. The fan shaft 120 is configured to support a fan pulley and an engine fan. The fan shaft 120 may be comprised of a metal, or a metal alloy. For example, the fan shaft 120 may be comprised of aluminum alloy, cast iron, steel, or the like.

The location of the fan shaft 120 may be configured to change relative to an engine to which the mounting plate 100 is coupled depending on a position in which the mounting plate 100 (e.g., the body 110) is coupled to the engine. For example, a first location of the fan shaft 120 (when the body 110 is) in at least one of the plurality of positions may be changed relative to a second location of the fan shaft 120 (when the body 110 is) in at least (another) one of the plurality of positions. The vertical location and/or the horizontal location of the fan shaft 120 may be changed. For example, a first vertical location of the fan shaft in at least one of the plurality of positions may be changed relative to a second vertical location of the fan shaft in at least one of the plurality of positions. For example, the second vertical location may be higher or lower than the first vertical location. In another example, a first horizontal location of the fan shaft in at least one of the plurality of positions may be changed relative to a second horizontal location of the fan shaft in at least one of the plurality of positions. In some examples, both the vertical and horizontal location of the fan shaft may be changed. Coupling the mounting plate 100 to the engine in a specific position amongst a plurality of positions may allow an engine, mounting plate, and a fan assembly (e.g., a fan and fan pulley) to fit within the spatial constraint of an engine bay or another enclosure.

The mounting plate 100 includes a plurality of body mounting holes 130(a-e) extending through the body 110. The body mounting holes 130 are configured to receive a fastener for coupling the body 110 to an engine. As illustrated in the example of FIG. 1, the mounting plate 100 includes five body mounting holes. In other examples, additional or fewer body mounting holes may be used. For example, the mounting plate 100 may include three body mounting holes 130. In another example, the mounting plate may include six body mounting holes 130. In some examples, as illustrated in FIG. 1, the body mounting holes 130 may be disposed proximate to the perimeter of the body 110. In other examples, the body mounting holes may be disposed in different locations. In some examples, and as illustrated in FIG. 1, the body mounting holes 130 may extend through the body 110 near the perimeter 111 of the body 110. In other examples, one or more body mounting holes 130 may be located proximate to a center of the body 110.

In some examples, the mounting plate 100 may include one or more reference marks (reference marks 131, 132, and 133). Each of the one or more reference marks may be provided at or near one of the body mounting holes 130 and may be used to indicate a position in which the body 110 is mounted to an engine.

An engine may include a plurality of engine holes formed therein. Each engine hole may be configured to receive a fastener that extends through the mounting plate in order to couple the mounting plate 100 to the engine. One of the engine holes may be designated as the reference engine hole. For example, when looking at the front of an engine, the leftmost engine hole may be designated as the reference engine hole.

Accordingly, the body 110 may be rotated relative to the engine such that a first body mounting hole 130a corresponding to (e.g., located adjacent to) a first reference mark 131 is aligned with the reference engine hole. When the first body mounting hole 130a is aligned with the reference engine hole a fastener may extend through the first body mounting hole 130a and into the reference engine hole coupling the body 110 to the engine in a first position. One or more additional fasteners may extend through body mounting holes into engine holes in order to couple the body 110 to the engine.

Accordingly, a body mounting hole 130b corresponding to a second reference mark 132 may be aligned with the reference engine hole to couple the body 110 to the engine in a second position. A body mounting hole 130d corresponding to a third reference mark 133 may be aligned with the reference engine hole to couple the body 110 to the engine in a third position. Additional or fewer reference marks may be included. Additional or fewer mounting positions may be provided (e.g., possible, designated).

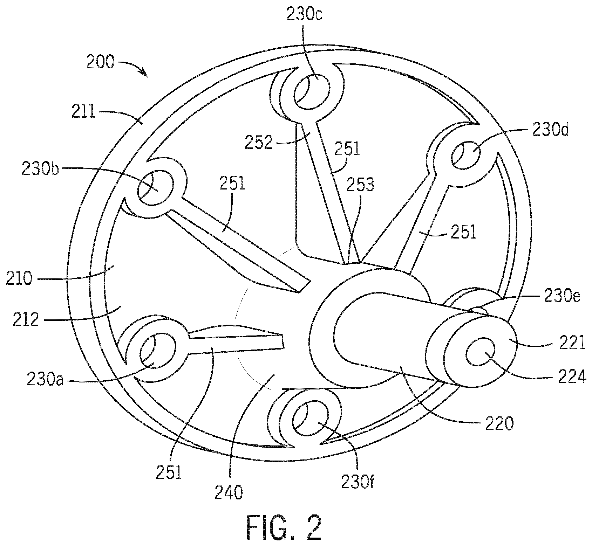

FIG. 2 illustrates a perspective view of a mounting plate according to another exemplary embodiment of the present disclosure. The mounting plate 200 includes body 210, fan shaft 220 extending away from the body 210, a plurality of body mounting holes 230(a-f), hub 240, and a plurality of ridges 251.

The body 210, like the body 110 of FIG. 1, is configured to be coupled to an engine in a plurality of positions via a fastener received in each of one or more of the body mounting holes 230(a-f). The plurality of different positions may be achieved by a rotational motion of the body 210. The body 210 includes a perimeter 211 along an outer edge of the body 210 defining a substantially circular shape of the body 210. The body 210 may be comprised of the same material as the body 110 of FIG. 1.

In some examples, and as illustrated in FIG. 2, the mounting plate 200 may include a hub 240 and one or more ridges 251. In some examples, the hub 240 and ridges 251 may be integrally formed with the body and may be comprised of the same material as the body 210. In other examples, the hub 240 and/or ridges 251 may be separate components and may be fixed (e.g., welded) to the body 210. The hub 240 and/or ridges 251 may be comprised of a metal, or a metal alloy. For examples, the hub 240 and/or ridges 251 may be comprised of aluminum alloy, cast iron, steel, or the like.

The hub 240 may extend beyond an outer surface 212 of the body 210. In some examples, and as illustrated in FIG. 1, the hub 240 may have a substantially cylindrical shape. In other examples, the hub 240 may have another shape. For example, the hub 240 may have a rectangular shape, a pentagonal shape, or the like.

The mounting plate 200 may further include one or more ridges 251. Each of the one or more ridges 251 may extend from a ridge first end 252 disposed proximate to a body mounting hole, for example one of the body mounting holes 230(a-f), to a ridge second end 253 that abuts the hub 240. In some examples, the one or more ridges 251 are integrally formed with the hub 240 and/or the body 210. In other examples, the ridge second end 253 may be fixed to the hub 240. For example, the ridge second end 253 may be welded to the hub 240.

The mounting plate 200 includes a fan shaft 220 extending away from the body 210 to a protruding end 221. In some examples, the fan shaft 220 may be disposed at a position other than a center of the body 210. The fan shaft 220, like the fan shaft 120 of FIG. 1, has a circular cross section. The diameter and the length of the fan shaft may vary. The fan shaft 220 includes a central axis extending along a central point of the circular cross section of the fan shaft 220. The fan shaft 220 is configured to support a fan pulley and an engine fan. The fan shaft 220 may be the same as the fan shaft 120 discussed above with respect to FIG. 1. A location of the fan shaft 220 may be configured to change relative to an engine to which the mounting plate 200 is coupled to depending on an orientation in which the mounting plate 200 (e.g., the body 210) is coupled to the engine. In some examples, and as illustrated in FIG. 2, the fan shaft 220 may extend from the hub 240. The fan shaft 220 may extend away from the hub 240 and the body 210. The hub 240 and/or the one or more ridges 251 may increase the structural rigidity of the mounting plate 200. Accordingly, the structural rigidity of the fan shaft 220 may be increased, allowing the fan shaft to support larger and/or heavier fan assemblies.

The fan shaft 220 may further include an internal cavity 224 formed therein. In some examples, a portion of the interior surface defining the internal cavity may be threaded and the internal cavity may be configured to receive a pulley fastener for rotatably coupling a fan pulley to the fan shaft 220. Additional description of coupling the fan pulley to the fan shaft is provided hereinafter with reference to FIGS. 5-8.

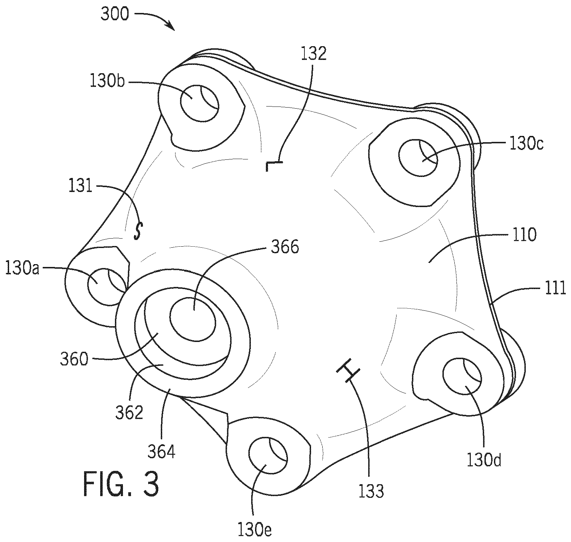

FIG. 3 illustrates a perspective view of yet another mounting plate 300 according to an exemplary embodiment of the present disclosure. The mounting plate 300 include a body 110, body mounting holes 130(a-e), a first reference mark 131, a second reference mark 132, and a third reference mark 133. The body 110, body mounting holes 130(a-e), a first reference mark 131, a second reference mark 132, and a third reference mark 133 may be the same as those discussed above with reference to FIG. 1. The body 110 includes outer surface 111, which may be the same as the outer surface 111 described above with respect to claim 1. In the example, as illustrated in FIG. 3, the mounting plate 300 includes a fan shaft mounting hole 360. The fan shaft mounting hole 360 may be configured to receive a fan shaft to be coupled to the mounting plate 300.

The fan shaft mounting hole 360 may be formed in an outer surface 112 of the body 110. The fan shaft mounting hole 360 is configured to change locations with respect to an engine to which the mounting plate 300 is coupled based on an orientation or position of the engine mounting plate 300 relative to the engine. The various positions of the mounting plate 300 relative to the engine may be achieved via rotational motion of the mounting plate. For example, a first location of the fan shaft mounting hole 360 (when the body 110 is) in at least one of the plurality of positions being changed relative a second location of the fan shaft mounting hole 360 (when the body 110 is) in at least (another) one of the plurality of positions. A vertical location and/or a horizontal location of the fan shaft mounting hole 360 may be changed. For example, a first vertical location of the fan shaft mounting hole in at least one of the plurality of positions may be changed relative to a second vertical location of the fan shaft in at least one of the plurality of positions. In another example, a first horizontal location of the fan shaft mounting hole in at least one of the plurality of positions is changed relative to a second horizontal location of the fan shaft in at least one of the plurality of positions. In some embodiments, both a vertical and a horizontal location may change.

In some examples, and as illustrated in FIG. 3, the fan shaft mounting hole 360 may be disposed between a center of the body 110 and a perimeter of the body. The size (e.g., radius, depth) and/or location of the fan shaft mounting hole 360 may vary. The depth and radius of the fan shaft mounting hole 360 may vary in consideration of the size and/or weight of the fan shaft and the size and/or weight of the fan assembly to be supported by the fan shaft.

In some embodiments, an interior curved surface 362 of the fan shaft mounting hole 360 may be threaded. Additionally, an end of a fan shaft to be coupled to the fan shaft mounting hole 360 may be threaded corresponding to the interior curved surface 362. The fan shaft may be configured to be attached to the body 110 by inserting the fan shaft into the fan shaft mounting hole 360. The fan shaft may be coupled to the fan shaft mounting hole 360 by screwing the fan shaft into the fan shaft mounting hole 360. In some examples, the fan shaft mounting hole 360 may include a mounting hole flange 364 surrounding the mounting hole 360. A fan shaft may abut the mounting hole flange 364 when the fan shaft is coupled to (e.g., inserted into) the fan shaft mounting hole. In other examples, a fan shaft may be coupled to the fan shaft mounting hole 360 by welding the fan shaft to the mounting hole 360. In some embodiments, the fan shaft mounting hole 360 may further include a shaft fastener hole 366. An interior curved surface of the shaft fastener hole may be threaded. The shaft fastener hole may be configured to receive a shaft fastener for securing a fan shaft to the mounting plate 300. The fan shaft may be made of a metal or metal alloy. For example, the fan shaft may be made of steel.

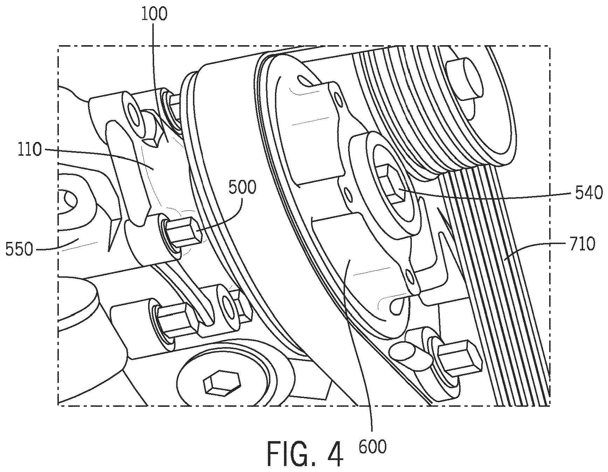

FIG. 4 illustrates a perspective view of an engine assembly according to an exemplary embodiment of the present disclosure. The engine assembly includes engine 550, mounting plate 100, and fan pulley 600. The fan pulley 600 is coupled to the fan shaft (such as fan shaft 120 of FIG. 1) of the mounting plate 100.

The engine 550 may be an internal combustion engine. For example, the engine 550 may be a spark ignition engine or a diesel compression ignition engine. The engine 550 may be used in wide variety of applications. For example, the engine may be used in a vehicle, watercraft, aircraft, construction equipment, agricultural equipment, generators, and the like.

The mounting plate may be the mounting plate 100 as illustrated in FIG. 1 or another mounting plate. The mounting plate 100 is coupled to the engine 550 using a plurality of body fasteners 500. In some examples, three body fasteners 500 may be used to couple the mounting plate 100 to the engine 550. In other examples, additional or fewer body fasteners 500 may be used. For examples, two or four body fasteners 500 may be used. In some examples, the body fasteners 500 may be bolts. In other examples, the body fasteners may be screws or rivets. Each of the plurality of the body fasteners 500 may extend through a body mounting hole, for example one of body mounting holes 130(a-e) of FIG 1., into an engine hole formed in the engine, coupling the mounting plate to the engine.

The body fasteners 500 may be comprised of metal or a metal alloy. For example, the body fasteners 500 may be comprised of aluminum alloy, cast iron, steel, or the like. The length and diameter of the body fasteners 500 may vary. For example, the length and diameter of the body fasteners 500 may vary in consideration of the size and weight of the mounting plate 100 and the size and/or the size and weight of a fan assembly to be supported by the fan shaft.

The fan pulley 600 may be fixed to the fan shaft using a pulley fastener 540. The pulley fasteners 540 may be a bolt or a screw. The pulley fasteners 540 may be comprised of a metal or a metal alloy. The size and shape of the pulley fastener 540 may vary. For example, the size and shape of the pulley fastener may vary depending on the size and/or weight of the fan pulley 600 and/or a fan to be fixed to the fan pulley.

The fan pulley 600 is rotatably coupled to the fan shaft of the mounting plate 100. The fan pulley 600 is configured to support a fan fixed thereto. The fan pulley 600 is rotatably connected the fan shaft of the mounting plate 100 such that the fan pulley 600 and a fan fixed to the fan pulley 600 may rotate about the fan shaft. A portion or portions of the fan belt 710 may reside in one or more channels formed in the fan pulley 600. A fan belt 710 may be wrapped around a portion of the fan pulley so as to transfer mechanical energy to the fan pulley 600 causing the fan pulley 600, and a fan attached to the fan pulley 600, to rotate. The fan belt 710 may also be wrapped around a portion of a camshaft so as to transfer mechanical energy from the camshaft to the fan pulley 600 when operation of the engine causes the cam shaft to rotate. In some examples, the fan belt 710 may also be wrapped around a portion of a pulley for operation of a water pump.

FIG. 5 illustrates a cross section view of a mounting plate and a fan assembly according to an exemplary embodiment of the present disclosure. The fan assembly includes a fan pulley 600 and a fan shaft. The fan 700 is fixed to the pulley 600 using fan plate 720 and one or more fan fasteners 520. The fan 700 may be brought into contact with the fan pulley 600. A fan plate 720 may then be placed over the fan 700. One or more fan fasteners 520 may extend through the fan plate 720 and/or the fan 700 and into the fan pulley 600 fixing the fan 700 to the pulley 600. The one or more fan fasteners 520 may be a bolt or a screw. The one or more fan fasteners 520 may be comprised of a metal or a metal alloy. The size and shape of the fan fastener 520 may vary. For example, the size and shape of the fan fastener 520 may vary depending on the size and/or weight of the fan pulley 600 and/or a fan to be fixed to the fan pulley 600. The size of the fan 700 may vary corresponding to the cooling needs of the engine.

The body 110 may be the same as the body 110 described above with respect to FIG. 1. The body 110 may further include inner surface 113. The inner surface 113 may be a surface opposite the outer surface 112 of the body. The inner surface 113 may abut an engine, when the body 110 is coupled to an engine. The body 110 may be coupled to an engine using one or more body fasteners 500. In some examples, as illustrated in FIG. 5, the body 110 may further include one or more internal pockets 115 therein. The one or more internal pockets 115 may be hollow interior portions of the body 110. One or more of the internal pockets 115 may connect to the internal cavity 224 of the fan shaft 120. The internal cavity 224 of the fan shaft 120 may be the same as the internal cavity 224 discussed above with respect to FIG. 2.

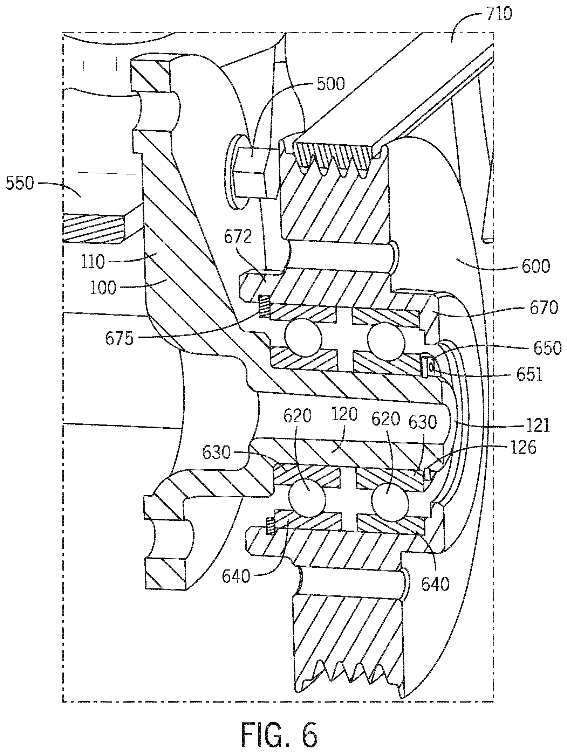

FIG. 6 illustrates a cross section view of a fan pulley assembly according to an exemplary embodiment of the present disclosure. The fan pulley assembly includes fan pulley 600, fan bearing 620, inner rings 630, outer rings 640, and washer 650. As illustrated in FIG. 6, the fan pulley 600 is rotatably coupled to the fan shaft 120 of the fan mounting plate 100.

The fan pulley assembly may include one or more bearing assemblies. Each bearing assembly may include a fan bearing 620 disposed between an inner ring 630 and an outer ring. The fan pulley assembly as illustrated in FIG. 6 includes two bearing assemblies. Additional, or fewer bearing assemblies may be used. The fan bearing 620 may be, for example, a ball bearing for receiving frictional force between the inner ring 630 and the outer ring 640, when the inner ring 630 and/or the outer ring 640 rotate relative to one another. The fan pulley 600 may be rotatably coupled to the fan shaft 120 such that the inner ring 630 of each of the bearing assemblies is in contact with the fan shaft 120. The fan pulley 600 may be rotatably coupled to the fan shaft such that the outer ring 640 of each of the bearing assemblies is in contact with the fan pulley 600.

The fan pulley 600 may include a retention feature 670 extending inward from the interior curved surface of the fan assembly on a front end of the fan pulley (i.e., an end facing away from the body 110 and engine 550). The fan pulley 600 may further include a locking groove 672 formed in the interior curved surface of the fan pulley 600 proximate to a back end of the fan pulley 600 (i.e., an end facing toward the body 110 and engine 550). The locking groove 672 may be configured to receive a locking member 675 for locking or securing the one or more bearing assemblies between the retention member 670 and the locking member 675. The outer ring 640 of each of the bearing assemblies may be locked or secured between the retention member 670 and the locking member 675.

The fan shaft 120 may further include a notch 126 formed therein proximate to the protruding end 121 of the fan shaft 120. The notch 126 may be configured to receive a washer 650 for locking or securing each of the one or more bearing assemblies between the washer 650 and the body 110 of the mounting plate 100. The inner bearing of each of the bearing assemblies may be locked or secured between the body 110 and the washer 650. In some examples the washer 650 may include a washer hole 651 formed therein. The washer hole 651 may be configured to receive a washer fastener. The washer fastener may be configured to extend through the washer hole 651 into a cavity formed in the inner ring 630 of the bearing assembly, fixing the washer to the inner ring 630. The washer fastener may fix an inner ring 630 of one of the bearing assemblies to the washer 650 and/or the fan shaft 120.

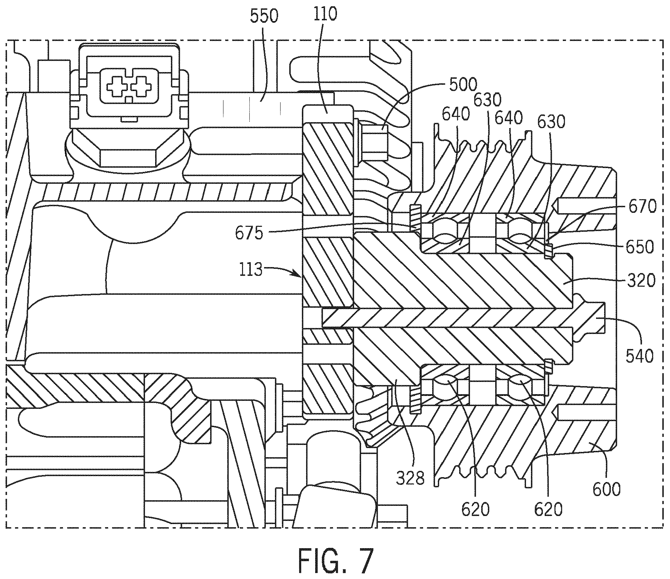

FIG. 7 illustrates a cross section view of a fan assembly according to another embodiment of the present disclosure. The fan assembly includes a mounting plate, for example, the mounting plate 300 as described in FIG. 3, and a fan shaft 320. In this example, the fan shaft 320 is formed as a separate component from the mounting plate 300. The fan shaft 320 may be comprised of a metal or metal alloy. For example, the fan shaft 320 may be comprised of steel. The fan shaft 320 may further include a flanged portion 328 having a larger diameter than the rest of the fan shaft 320.

In this example, the fan pulley 600, bearing assemblies, and fan shaft may be secured to one another similarly to the fan pulley 600, bearing assemblies, and fan shaft 120 as described above with respect to FIG. 6. The inner rings 630 of the one or more bearing assemblies may be locked or secured between the washer 650 and the flange portion 328 of the fan shaft 320. The outer rings 640 of the one or more bearing rings may be locked or secured between the retention feature 670 and the locking member 675. Accordingly, the pulley 600 may be rotatably coupled to the fan shaft 320.

The fan shaft 320 may be fixed to the body 110 of the mounting plate 300 using a shaft fastener 540. The shaft fastener 540 may extend through the fan shaft 320 into the shaft fastener hole 366. In some embodiments, as illustrated in FIG. 7, the shaft fastener hole may extend through the body 110. The shaft fastener 540 may be a bolt. The shaft fastener may be comprised of a metal or a metal alloy.

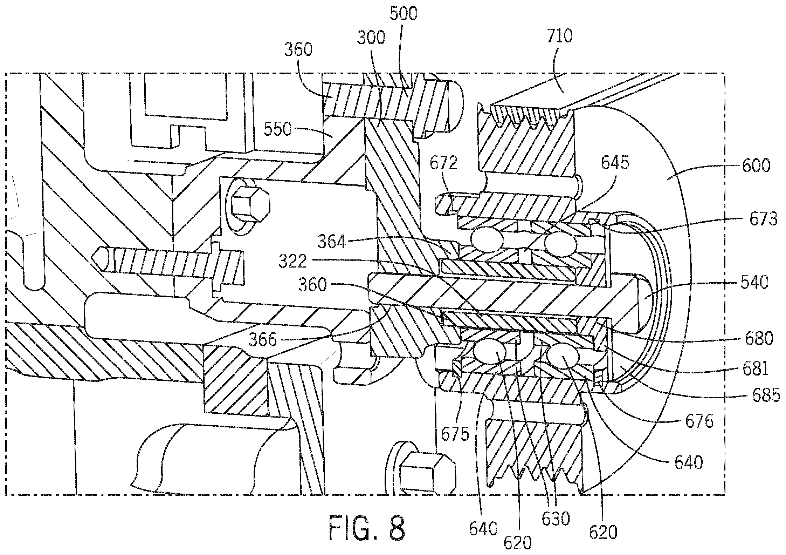

FIG. 8 illustrates a cross section view of a fan assembly according to yet another embodiment of the present disclosure. The fan assembly includes a mounting plate 300 and a fan shaft 322. In this example, the fan shaft 322 is formed as a separate component from the mounting plate 300. The fan shaft 322 may be comprised of a metal or metal alloy. For example, the fan shaft 322 may be comprised of steel.

In this example, the fan shaft 322 may be inserted into the fan shaft mounting hole 360 of the mounting plate 300 such that the fan shaft 322 extends away from the body 110. In some examples the interior curved surface 362 of the body mounting hole 360 may be threaded. An end of the fan shaft 322 to be inserted into the body mounting hole 360 may be threaded and have threads corresponding to those of the interior curved surface 362 of the body mounting hole 360. Accordingly, the fan shaft 322 may be rotated (e.g., screwed) into that body mounting hole 360 such that the threads of the interior curved surface 362 interlock with the threads of the fan shaft 322, thus securing the fan shaft 322 to the body mounting hole 360.

The fan assembly includes one or more bearing assemblies, including a bearing 620, inner ring 630, and outer ring 640. The bearing 620, inner ring 630, and outer ring 640 may be the same as those discussed above with respect to FIG. 6. The one or more bearing assemblies may be placed over the fan shaft 322, such that the inner ring 630 circumscribes the fan shaft 322. One or more bearing assemblies and one or more spacers 645 may be placed over the fan shaft such that the bearing assemblies and/or the spacers circumscribe the fan shaft 322. For example, a first bearing assembly may be placed over the fan shaft and brought into contact with the mounting hole flange 364. A spacer 645 may then be placed over the fan shaft 322 and brought into contact with the first bearing assembly. A second bearing assembly may then be placed over the fan shaft 322 and brought into contact with the spacer 645.

A retention ring 680, retention plate 685, and a shaft fastener 540 may be used to secure the fan shaft 322, the one or more bearing assemblies, one or more spacers 645, and the pulley 600. The retention ring 680 may include a retention ring flange 681. The retention ring 680 may be placed adjacent to the fan shaft 322. The retention ring flange 681 may protrude from the retention ring 680. The retention ring flange 681 may lock or secure the one or more inner rings 630 and spacers 645 between the mounting hole flange 364 and the retention ring flange 681. A retention plate 685 may be placed adjacent to the retention ring 680. A shaft fastener 540 may be extended through a hole formed in the retention plate 685, retention ring 680, and fan shaft 322 into the mounting plate 300. The shaft fastener 540 may extend into the shaft fastener hole 366 of the body. The shaft fastener 540 and an interior surface of the shaft fastener hole 366 may be threaded and have corresponding threads that interlock with one another when the shaft fastener 540 is rotated into the shaft fastener hole 366.

The fan assembly may further include a locking member 675 and a retention member 676 for locking or securing the one or more outer rings 640 relative to the fan pulley 600. The retention member 676 may be configured to fit into a retention groove 673 formed in the inner curved surface of the fan pulley 600. The retention groove 673 may be formed in the inner curved surface of the fan pulley 600 proximate to a front end (e.g., an end configured to be further from the mounting plate 300 and engine 550) of the fan pulley 600. The retention groove 673 may be configured to receive the retention member 676. The retention member 676 may be configured to contact an outer ring 640 of one of the bearing assemblies and prevent translational movement of the bearing assembly towards a front end of the fan pulley 600. The fan assembly may also include a locking groove 672 formed in the fan pulley 600 and a locking member 675. The locking groove 672 and the locking member 675 may be the same as those discussed above with respect to FIG. 6. The retention member 676 and the locking member 675 may lock or secure the one or more bearing assemblies between the retention member 676 and the locking member 675. Accordingly, the fan pulley 600 may be rotatably coupled to the fan shaft 322.

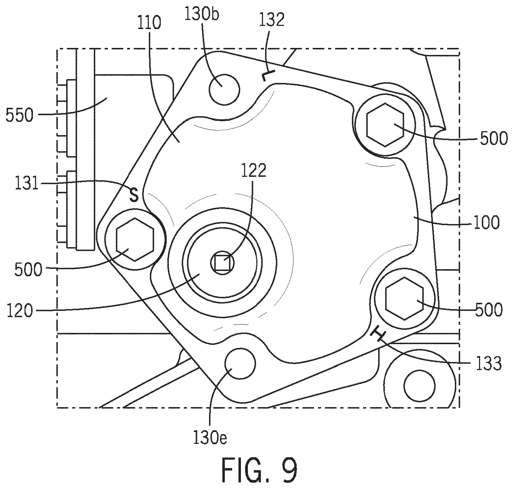

FIGS. 9-11 illustrate an engine assembly including a mounting plate coupled to an engine in a plurality of positions. The mounting plate may be, for example, mounting plate 100 as described above with respect to FIG. 1. The engine may be, for example engine 550 as described above with respect to FIG. 4. In the example, as illustrated in FIGS. 9-11, the plurality of positions of the body 110 may include three positions. Additional or fewer positions are possible. Each of the plurality of positions may be achieved via a rotational motion of the body 110.

In each of the positions of the mounting plate 100 as illustrated in FIGS. 9-11 three body fasteners 500 are used to couple the mounting plate (e.g., the body 110) to the engine. In the engine assembly as illustrated in each of FIGS. 9-11, the left-most engine mounting hole may be the reference engine hole. In each of FIGS. 9-11 a body fastener 500 extends through a body mounting hole (one of body mounting holes 130(a-e)) and into the reference engine hole (in FIGS. 9-11 the location of the reference engine hole corresponds to the location of the left-most body fastener 500).

The engine 550 as illustrated in FIGS. 9-11 include three engine mounting holes (e.g., engine mounting hole 360 illustrated in FIG. 8), each of which is occupied by a body fastener 500 in FIGS. 9-11. The engine 550 may include additional or fewer engine holes. In one example, the engine 550 may include two engine holes. In another example, the engine 550 may include four engine holes. In some examples, not all of the engine mounting holes are occupied by a body fastener 500 when the body 110 is coupled to the engine 550. The number of body fasteners 500 used to couple the body 110 to the engine 550 may vary. In some examples, two body fasteners 500 may be used to couple the body 110 to the engine 550. In other examples four body fasteners 500 may be used to couple the body 110 to the engine 550. A different set of two or more of the plurality of body mounting holes 130(a-e) may receive a body fastener for coupling the body 110 to the engine in each of the plurality of positions of the body 110.

FIG. 9 illustrates the mounting plate 100 (e.g., the body 110) coupled to an engine 550 in a first position. When the mounting plate 100 is coupled to the engine 550 in the first position, the body mounting hole corresponding to (i.e., adjacent to) the first reference mark 131 may be aligned with the reference engine hole. As illustrated in FIG. 9, the first reference mark 131 is aligned with the reference engine hole. As illustrated in FIG. 9 two additional body fasteners 500 extend through body mounting holes into the engine holes, coupling the mounting plate 100 to the engine 550. As illustrated in FIG. 9, when the mounting plate 100 is coupled to the engine in the first position, the central axis 122 of the fan shaft 120 is in a first location.

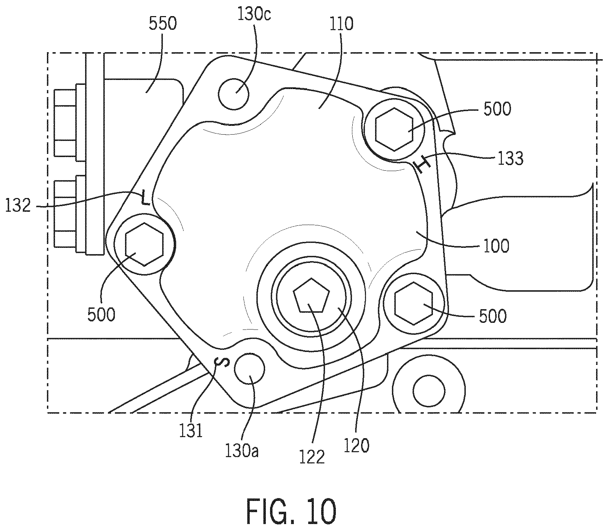

FIG. 10 illustrates the mounting plate 100 (e.g., the body 110) coupled to an engine 550 in a second position. When the mounting plate 100 is coupled to the engine 550 in the second position, the body mounting hole corresponding to (i.e., adjacent to) the second reference mark 132 may be aligned with the reference engine hole. As illustrated in FIG. 10, the second reference mark 132 is aligned with the reference engine hole. As illustrated in FIG. 10 two additional body fasteners 500 extend through body mounting holes into the engine holes, coupling the mounting plate 100 to the engine 550. As illustrated in FIG. 10, when the mounting plate 100 is coupled to the engine in the second position, the central axis 122 of the fan shaft 120 is in a second location.

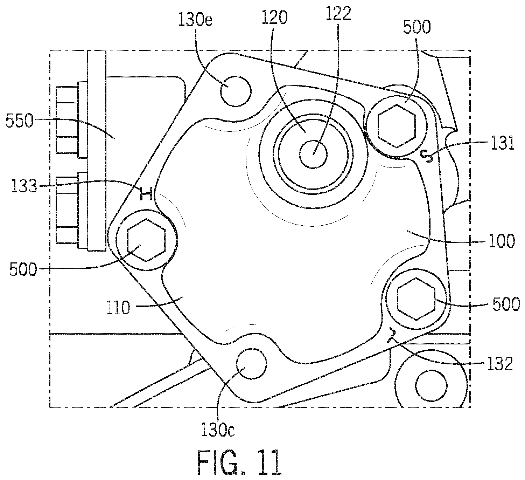

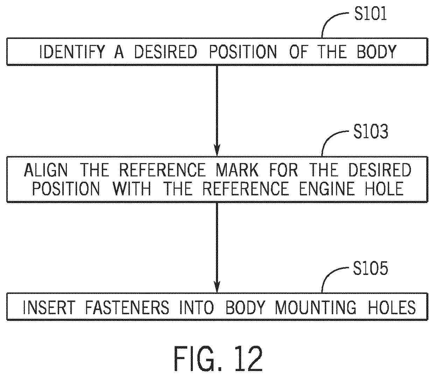

FIG. 11 illustrates the mounting plate 100 (e.g., the body 110) coupled to an engine 550 in a third position. When the mounting plate 100 is coupled to the engine 550 in the third position, the body mounting hole corresponding to (i.e., adjacent to) the third reference mark 133 may be aligned with the reference engine hole. As illustrated in FIG. 11, the third reference mark 133 is aligned with the reference engine hole. As illustrated in FIG. 11 two additional body fasteners 500 extend through body mounting holes into the engine holes, coupling the mounting plate 100 to the engine 550. As illustrated in FIG. 12, when the mounting plate 100 is coupled to the engine in the third position, the central axis 122 of the fan shaft 120 is in a third location.

As illustrated in FIGS. 9-11a first location of the fan shaft 120 in at least one of the plurality of positions of the body 110 is changed relative to a second location of the fan shaft 120 in at least another one of the plurality of positions of the fan shaft 120. For example, as illustrated by the three positions of the mounting plate 100 shown in FIGS. 9-11, a vertical location of the fan shaft 120 (e.g., the central axis of the fan shaft 120) in at least one of the plurality of positions (of the body 110) is changed relative to a second vertical location of the fan shaft 120 (when the body 110 is) in at least (another) one of the plurality (of body 110) positions. In another example, as illustrated by the three positions of the mounting plate 100 shown in FIGS. 9-11, a horizontal location of the fan shaft (e.g., the central axis of the fan shaft 120) in at least one of the plurality of positions (of the body 110) is changed relative to a second horizontal location of the fan shaft 120 (when the body 110 is) in at least (another) one of the plurality (of body 110) positions. In some examples, both a horizontal and a vertical location of the fan shaft 120 may be changed depending on the position of the body 110.

FIG. 12 illustrates a flowchart for coupling a fan mounting plate to an engine according to an exemplary embodiment of the present disclosure. The various mounting plates and engine assemblies disclosed herein may utilize the flowchart of FIG. 12 for coupling the mounting plate to an engine. Additional, fewer, or different acts may be provided. The flow chart of FIG. 12 may be employed with any of the mounting plates described herein. However, for ease of explanation, the flowchart of FIG. 12 is explained below with reference to mounting plate 100 as illustrated in FIG. 1 and FIGS. 9-11.

At act S101, a desired position of the body 110 of the mounting plate 100 relative to an engine (for example, engine 550) is identified. The desired position of the body 110 may be identified in consideration of the location of the fan shaft 120 relative to the engine 550 in each of the plurality of positions. In other examples, such as when the mounting plate 300 is used, the desired position of the of the body 110 may be identified in consideration of the location of the body mounting hole 360 relative to the engine 550 in each of the plurality of positions. The desired position of the body 110 may be identified in consideration of the location of the fan shaft in combination with the size of a fan assembly, for example fan pulley 600 and fan 700 to be attached to the fan shaft 120 and the spatial constraints proximate to the engine 550. For example, there may be limited space within an engine bay or generator enclosure for the fan assembly and the fan assembly may only fit within the engine bay or generator enclosure when the fan shaft 120 is in specific location or locations of the fan shaft locations based on the plurality of positions of the body 110 relative to the engine 550. In some examples, there may only be a single position of the body 110 that allows a fan pulley and fan of a required size to fit within the spatial constraints of an engine bay or other enclosure surrounding the engine. In such an example, the desired position may be the only position of the body 110 that allows the fan assembly to fit within the engine bay or other enclosure.

At act S103, the reference mark for the desired position is aligned with the reference engine hole. Each of the plurality of positions of the body 110 relative to the engine 550 may be indicated by a reference mark, for example reference marks 131, 132, and 133 as described above with respect to FIGS. 1 and 9-11. Further, the engine may have an engine reference hole as described in connection with FIGS. 1 and 9-11. At act S103, a body mounting hole corresponding with a reference mark for the desired position of the body 110 relative to the engine 550 is aligned with the reference hole of the engine 550. The body 110 may be rotated relative to the engine 550 to align the reference mark for the desired position with the reference engine hole.

At act S105, one or more fasteners are inserted into the body mounting holes (e.g., one or more of body mounting holes 130(a-e)). The one or more fasteners may be one or more body fasteners 500 as described above with respect to FIG. 4. A body mounting fastener 500 may first be inserted through the body mounting hole corresponding with a reference mark for the desired position of the body 110 relative to the engine 550. One or more additional mounting fasteners 500 may be inserted through one or more body mounting holes 130(a-e). Each of the body fasteners 500 may extend through a body mounting hole into an engine hole formed in the engine 550, coupling the body 110 to the engine 550. Acts S101, S103, and S105 may be performed by during assembly of an engine assembly. Acts S101, 103, and 105 may be performed by an engine manufacturer (e.g., technician, robot, machine) or an engine user.

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

The term "or," as used herein, is used in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is understood to convey that an element may be either X, Y, Z; X and Y; X and Z; Y and Z; or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

## Claims

1. A fan mounting plate (300) comprising:
a body (110) configured to be coupled to an engine (550) in a plurality of positions, each of the plurality of positions achieved via a rotational motion of the body (110);
a fan shaft (320) mounting hole (360) formed in the body (110), a first location of the fan shaft mounting hole (360) in at least one of the plurality of positions being changed relative to a second location of the fan shaft mounting hole (360) in at least one of the plurality of positions; and
a plurality of body mounting holes (130a, 130b, 130c, 130d, 130e) extending through the body (110) and configured to receive a fastener (500) for coupling the body (110) to the engine (550).

2. The fan mounting plate (300) of claim 1, further comprising:
a fan shaft (320) configured to be attached to the body (110) by inserting the fan shaft (320) into the fan shaft mounting hole (360), the fan shaft (320) extending away from the body (110).

3. The fan mounting plate (300) of claim 1 or 2, wherein when the body (110) is coupled to the engine (550), a different set of two or more of the plurality of body mounting holes (130a, 130b, 130c, 130d, 130e) receive the fastener (500) for coupling the body (110) to the engine (550) in each of the plurality of positions.

4. The fan mounting plate (300) of any of the pending claims, wherein a first vertical location of the fan shaft mounting hole (360) in at least one of the plurality of positions is changed relative to a second vertical and/or horizontal location of the fan shaft (320) in at least one of the plurality of positions.

5. The fan mounting plate (300) of any of the pending claims, wherein the plurality of positions includes three positions.

6. The fan mounting plate (300) of any of the pending claims, wherein
- the plurality of body mounting holes (130a, 130b, 130c, 130d, 130e) includes five body mounting holes (130a, 130b, 130c, 130d, 130e), and/or
- wherein the body (110) has a pentagonal shape.

7. The fan mounting plate (300) of any of the pending claims, wherein the fan shaft mounting hole (360) extends through the body (110).

8. A fan mounting plate (100, 200) comprising:
a body (110, 210) configured to be coupled to an engine (550) in a plurality of positions, each of the plurality of positions achieved via a rotational motion of the body (110, 210);
a fan shaft (120, 220) extending from the body (110, 210), a first location of the fan shaft (120, 220) in at least one of the plurality of positions being changed relative to a second location of the fan shaft (120, 220) in at least one of the plurality of positions; and
a plurality of body mounting holes (130a, 130b, 130c, 130d, 130e, 230a, 230b, 230c, 230d, 230e) extending through the body (110, 210) and configured to receive a fastener (500) for coupling the body (110, 210) to the engine (550).

9. The fan mounting plate (100, 200) of claim 8, wherein when the body (110, 210) is coupled to the engine (550) a different set of two or more of the plurality of body mounting holes (130a, 130b, 130c, 130d, 130e, 230a, 230b, 230c, 230d, 230e) receive the fastener (500) for coupling the body (110, 210) to the engine (550) in each of the plurality of positions.

10. The fan mounting plate (100, 200) of claim 8 or 9, wherein a first vertical location of the fan shaft (120, 220) in at least one of the plurality of positions is changed relative to a second vertical and/or horizontal location of the fan shaft (120, 220) in at least one of the plurality of positions.

11. The fan mounting plate (100, 200) of any of claims 8 to 10, wherein
- the plurality of positions includes three positions, and/or wherein
- the plurality of body mounting holes (130a, 130b, 130c, 130d, 130e, 230a, 230b, 230c, 230d, 230e) includes five body mounting holes (130a, 130b, 130c, 130d, 130e, 230a, 230b, 230c, 230d, 230e), and/or
- wherein the body (110, 210) has a pentagonal shape.

12. An engine assembly comprising:
an engine (550);
a fan mounting plate (100, 200, 300) according to claim 8.

13. The engine assembly of claim 12, wherein a first vertical location of the fan shaft (120, 220, 320) in at least one of the plurality of positions is changed relative to a second vertical location of the fan shaft (120, 220, 320) in at least one of the plurality of positions, and
wherein a first horizontal location of the fan shaft (120, 220, 320) in at least one of the plurality of positions is changed relative to a second horizontal location of the fan shaft (120, 220, 320) in at least one of the plurality of positions.

14. The engine assembly of claim 12 or 13, wherein the plurality of positions includes at least three positions.

15. The engine assembly of any of claims 12 to 14, wherein the engine (550) is a compression ignition diesel engine.

## Patentansprüche

1. Gebläsemontageplatte (300), umfassend:
einen Körper (110), der konfiguriert ist, an einem Motor (550) in einer Mehrzahl von Positionen gekoppelt zu sein, wobei jede der Mehrzahl von Positionen durch eine Drehbewegung des Körpers (110) ermöglicht wird;
eine Gebläsewellen (320)-Montageöffnung (360), die in dem Körper (110) ausgebildet ist, wobei eine erste Stelle der Gebläsewellen-Montageöffnung (360) in mindestens einer der Mehrzahl von Positionen relativ zu einer zweiten Stelle der Gebläsewellen-Montageöffnung (360) in mindestens einer der Mehrzahl von Positionen veränderbar ist; und
eine Mehrzahl von Körper-Montageöffnungen (130a, 130b, 130c, 130d, 130e), die sich durch den Körper (110) erstrecken und konfiguriert sind, ein Befestigungselement (500) zur Kopplung des Körpers (110) mit dem Motor (550) aufzunehmen.

2. Gebläsemontageplatte (300) nach Anspruch 1, ferner umfassend:
eine Gebläsewelle (320), die konfiguriert ist, an dem Körper (110) befestigt zu sein, indem die Gebläsewelle (320) in die Gebläsewellen-Montageöffnung (360) eingeführt wird, wobei sich die Gebläsewelle (320) von dem Körper (110) weg erstreckt.

3. Gebläsemontageplatte (300) nach Anspruch 1 oder 2, wobei, wenn der Körper (110) mit dem Motor (550) gekoppelt ist, ein anderer Satz von zwei oder mehr der Mehrzahl von Körper-Montageöffnungen (130a, 130b, 130c, 130d, 130e) das Befestigungselement (500) zum Koppeln des Körpers (110) mit dem Motor (550) in jeder der Mehrzahl von Positionen aufnimmt.

4. Gebläsemontageplatte (300) nach einem der vorhergehenden Ansprüche, wobei eine erste vertikale Stelle der Gebläsewellen-Montageöffnung (360) in mindestens einer der Mehrzahl von Positionen relativ zu einer zweiten vertikalen und/oder horizontalen Stelle der Gebläsewelle (320) in mindestens einer der Mehrzahl von Positionen veränderbar ist.

5. Gebläsemontageplatte (300) nach einem der vorhergehenden Ansprüche, wobei die Mehrzahl von Positionen drei Positionen umfasst.

6. Gebläsemontageplatte (300) nach einem der vorhergehenden Ansprüche, wobei
- die Mehrzahl von Körper-Montageöffnungen (130a, 130b, 130c, 130d, 130e) fünf Körper-Montageöffnungen (130a, 130b, 130c, 130d, 130e) umfasst, und/oder
- wobei der Körper (110) eine fünfeckige Form umfasst.

7. Gebläsemontageplatte (300) nach einem der vorstehenden Ansprüche, wobei sich die Gebläsewellen-Montageöffnung (360) durch den Körper (110) erstreckt.

8. Gebläsemontageplatte (100, 200) umfassend:
einen Körper (110, 210), der konfiguriert ist, an einem Motor (550) in einer Mehrzahl von Positionen gekoppelt zu sein, wobei jede der Mehrzahl von Positionen durch eine Drehbewegung des Körpers (110, 210) ermöglicht wird;
eine Gebläsewelle (120, 220), die sich von dem Körper (110, 210) erstreckt, wobei eine erste Stelle der Gebläsewelle (120, 220) in mindestens einer der Mehrzahl von Positionen relativ zu einer zweiten Stelle der Gebläsewelle (120, 220) in mindestens einer der Mehrzahl von Positionen veränderbar ist; und
eine Mehrzahl von Körper-Montageöffnungen (130a, 130b, 130c, 130d, 130e, 230a, 230b, 230c, 230d, 230e) vorgesehen sind, die sich durch den Körper (110, 210) erstrecken und konfiguriert sind, ein Befestigungselement (500) zur Kopplung des Körpers (110, 210) mit dem Motor (550) aufzunehmen.

9. Gebläsemontageplatte (100, 200) nach Anspruch 8, wobei, wenn der Körper (110, 210) mit dem Motor (550) gekoppelt ist, ein anderer Satz von zwei oder mehr der Mehrzahl von Körper-Montageöffnungen (130a, 130b, 130c, 130d, 130e, 230a, 230b, 230c, 230d, 230e) das Befestigungselement (500) zum Koppeln des Körpers (110, 210) mit dem Motor (550) in jeder der Mehrzahl von Positionen aufnimmt.

10. Gebläsemontageplatte (100, 200) nach Anspruch 8 oder 9, wobei eine erste vertikale Stelle der Gebläsewelle (120, 220) in mindestens einer der Mehrzahl von Positionen relativ zu einer zweiten vertikalen und/oder horizontalen Stelle der Gebläsewelle (120, 220) in mindestens einer der Mehrzahl von Positionen veränderbar ist.

11. Gebläsemontageplatte (100, 200) nach einem der Ansprüche 8 bis 10, wobei
- die Mehrzahl von Positionen drei Positionen umfasst, und/oder wobei
- die Mehrzahl von Körper-Montageöffnungen (130a, 130b, 130c, 130d, 130e, 230a, 230b, 230c, 230d, 230e) fünf Körper-Montageöffnungen (130a, 130b, 130c, 130d, 130e, 230a, 230b, 230c, 230d, 230e) umfasst und/oder
- wobei der Körper (110, 210) eine fünfeckige Form umfasst.

12. Motoranordnungsgruppe umfassend:
einen Motor (550);
eine Gebläsemontageplatte (100, 200, 300) nach Anspruch 8.

13. Motoranordnungsgruppe nach Anspruch 12, wobei eine erste vertikale Stelle der Gebläsewelle (120, 220, 320) in mindestens einer der Mehrzahl von Positionen relativ zu einer zweiten vertikalen Stelle der Gebläsewelle (120, 220, 320) in mindestens einer der Mehrzahl von Positionen veränderbar ist, und
wobei eine erste horizontale Stelle der Gebläsewelle (120, 220, 320) in mindestens einer der Mehrzahl von Positionen relativ zu einer zweiten horizontalen Stelle der Gebläsewelle (120, 220, 320) in mindestens einer der Mehrzahl von Positionen veränderbar ist.

14. Motoranordnungsgruppe nach Anspruch 12 oder 13, wobei die Mehrzahl von Positionen mindestens drei Positionen umfasst.

15. Motoranordnungsgruppe nach einem der Ansprüche 12 bis 14, wobei der Motor (550) ein Kompressionszündungs-Dieselmotor ist.

## Revendications

1. Plaque de montage de ventilateur (300) comprenant :
un corps (110) configuré pour être couplé à un moteur (550) dans une pluralité de positions, chacune de la pluralité de positions étant obtenue par un mouvement de rotation du corps (110) ;
un trou de montage (360) d'arbre de ventilateur (320) formé dans le corps (110), un premier emplacement du trou de montage (360) d'arbre de ventilateur dans au moins une de la pluralité de positions étant modifié par rapport à un second emplacement du trou de montage (360) d'arbre de ventilateur dans au moins une de la pluralité de positions ; et
une pluralité de trous de montage de corps (130a, 130b, 130c, 130d, 130e) s'étendant à travers le corps (110) et configurés pour recevoir un élément de fixation (500) pour coupler le corps (110) au moteur (550).

2. Plaque de montage de ventilateur (300) de la revendication 1, comprenant en outre :
un arbre de ventilateur (320) configuré pour être fixé au corps (110) par insertion de l'arbre de ventilateur (320) dans le trou de montage (360) d'arbre de ventilateur, l'arbre de ventilateur (320) s'étendant en s'éloignant du corps (110).

3. Plaque de montage de ventilateur (300) de la revendication 1 ou 2, dans laquelle lorsque le corps (110) est couplé au moteur (550), un ensemble différent de deux ou plus de la pluralité de trous de montage de corps (130a, 130b, 130c, 130d, 130e) reçoit l'élément de fixation (500) pour coupler le corps (110) au moteur (550) dans chacune de la pluralité de positions.

4. Plaque de montage de ventilateur (300) de l'une des revendications précédentes, dans laquelle un premier emplacement vertical du trou de montage (360) d'arbre de ventilateur dans au moins une de la pluralité de positions est modifié par rapport à un second emplacement vertical et/ou horizontal de l'arbre de ventilateur (320) dans au moins une de la pluralité de positions.

5. Plaque de montage de ventilateur (300) de l'une des revendications précédentes, dans laquelle la pluralité de positions comprend trois positions.

6. Plaque de montage de ventilateur (300) de l'une des revendications précédentes, dans laquelle
- la pluralité de trous de montage de corps (130a, 130b, 130c, 130d, 130e) comprend cinq trous de montage de corps (130a, 130b, 130c, 130d, 130e), et/ou
- dans laquelle le corps (110) présente une forme pentagonale.

7. Plaque de montage de ventilateur (300) de l'une des revendications précédentes, dans laquelle le trou de montage (360) d'arbre de ventilateur s'étend à travers le corps (110).

8. Plaque de montage de ventilateur (100, 200) comprenant :
un corps (110, 210) configuré pour être couplé à un moteur (550) dans une pluralité de positions, chacune de la pluralité de positions étant obtenue par un mouvement de rotation du corps (110, 210) ;
un arbre de ventilateur (120, 220) s'étendant depuis le corps (110, 210), un premier emplacement de l'arbre de ventilateur (120, 220) dans au moins une de la pluralité de positions étant modifié par rapport à un second emplacement de l'arbre de ventilateur (120, 220) dans au moins une de la pluralité de positions ; et
une pluralité de trous de montage de corps (130a, 130b, 130c, 130d, 130e, 230a, 230b, 230c, 230d, 230e) s'étendant à travers le corps (110, 210) et configurés pour recevoir un élément de fixation (500) pour coupler le corps (110, 210) au moteur (550).

9. Plaque de montage de ventilateur (100, 200) de la revendication 8, dans laquelle lorsque le corps (110, 210) est couplé au moteur (550), un ensemble différent de deux ou plus de la pluralité de trous de montage de corps (130a, 130b, 130c, 130d, 130e, 230a, 230b, 230c, 230d, 230e) reçoit l'élément de fixation (500) pour coupler le corps (110, 210) au moteur (550) dans chacune de la pluralité de positions.

10. Plaque de montage de ventilateur (100, 200) de la revendication 8 ou 9, dans laquelle un premier emplacement vertical de l'arbre de ventilateur (120, 220) dans au moins une de la pluralité de positions est modifié par rapport à un second emplacement vertical et/ou horizontal de l'arbre de ventilateur (120, 220) dans au moins une de la pluralité de positions.

11. Plaque de montage de ventilateur (100, 200) de l'une des revendications 8 à 10, dans laquelle
- la pluralité de positions comprend trois positions, et/ou dans laquelle
- la pluralité de trous de montage de corps (130a, 130b, 130c, 130d, 130e, 230a, 230b, 230c, 230d, 230e) comprend cinq trous de montage de corps (130a, 130b, 130c, 130d, 130e, 230a, 230b, 230c, 230d, 230e), et/ou
- dans laquelle le corps (110, 210) présente une forme pentagonale.

12. Ensemble moteur comprenant :
un moteur (550) ;
une plaque de montage de ventilateur (100, 200, 300) selon la revendication 8.

13. Ensemble moteur de la revendication 12, dans lequel un premier emplacement vertical de l'arbre de ventilateur (120, 220, 320) dans au moins une de la pluralité de positions est modifié par rapport à un second emplacement vertical de l'arbre de ventilateur (120, 220, 320) dans au moins une de la pluralité de positions, et
dans lequel un premier emplacement horizontal de l'arbre de ventilateur (120, 220, 320) dans au moins une de la pluralité de positions est modifié par rapport à un second emplacement horizontal de l'arbre de ventilateur (120, 220, 320) dans au moins une de la pluralité de positions.

14. Ensemble moteur de la revendication 12 ou 13, dans lequel la pluralité de positions comprend au moins trois positions.

15. Ensemble moteur de l'une des revendications 12 à 14, dans lequel le moteur (550) est un moteur diesel à allumage par compression.
